# EUROPÄISCHE PATENTANMELDUNG

(11) **EP 1 120 724 A1**
(43) Veröffentlichungstag der Anmeldung: **01.08.2001**
(21) Anmeldenummer: 00101350.7
(22) Anmeldetag: 24.01.2000
(51) Int. Cl.: G06F 17/60

(54) **Verfahren zur automatisierten Abwicklung von Zuordnungsvorgängen in bezug auf Waren- und/oder Dienstleistungsangebote**

(71) Anmelder: SCHEIDT & BACHMANN GMBH, D-41238 Mönchengladbach (DE)
(72) Erfinder: Dr.Miller, Norbert, 41063 Mönchengladbach (DE); Dipl.-Ing.Schneider, Markus, 52477 Alsdorf (DE)
(74) Vertreter: Stenger, Watzke & Ring Patentanwälte

(57) **Zusammenfassung**

Der vorliegenden Erfindung liegt die Aufgabe zugrunde, ein Verfahren bereitzustellen welches auf viele verschiedene Anwendungsbereiche einfach anpaßbar, automatisch und insbesondere nutzerseitig denkbar vereinfacht durchführbar ist, wobei als technische Lösung wird mit der vorliegenden Erfindung vorgeschlagen ein Verfahren zur automatisierten Abwicklung von Verfügbarkeitsprüfungs-, Reservierungs- und Zuordnungsvorgängen in bezug auf örtlich festgelegte Waren- und/oder Dienstleistungsangebote, wobei unter Verwendung einer überregionalen Kommunikationsverbindung vor dem Hintergrund eines nutzerseitigen Bedarfs
a) eine nutzerseitige Festlegung auf ein anbieterseitiges Angebot erfolgt,
b) nutzerseitig eine Kennung übermittelt wird
c) anbieterseitig eine Reservierung unter Speicherung der Kennung und Bereitstellung der Reservierungs- und Kennungsinformationen an ein Kennungsprüfungssystem durchgeführt werden,
   und wobei unter Nutzung einer Nahbereichs-Kommunikationsverbindung
d) bei Eintritt des Nutzers in den Nahbereich des Kennungsprüfungssystems eine berührungslose Kennungsüberprüfung und
e) bei positivem Kennungsüberprüfungsergebnis eine Zugangsfreigabe für den Nutzer erfolgen.

## Beschreibung

Die vorliegende Erfindung betrifft ein Verfahren zur automatisierten Abwicklung von Verfügbarkeitsprüfungs-, Reservierungs- und Zuordnungsvorgängen in bezug auf örtlich festgelegte Waren- und/oder Dienstleistungsangebote.

Im Bereich von Dienstleistungsangeboten sind bereits umfangreiche Automatisierungsbestrebungen bekannt und im Gange. Vor allem für Dienstleistungsangebote, die für beliebige Nutzergruppen zu deren Verfügung vorgehalten werden, sollen die Einräumungen von Nutzungsberechtigungen denkbar vereinfacht und automatisiert werden. So sind beispielsweise halbautomatische Nutzungsberechtigungssysteme im Bereich der Ausgabe von Flugtickets, Bahnkarten, der Verwendung von Parkhäusern und Freizeitanlagen und dgl. bekannt. Aber auch im Bereich der Warenausgabe sind Vereinfachungsbemühungen im Gange, beispielsweise eingeleitet durch sogenannte Drive-In's und dergleichen.

Bekannte Systeme kommen allerdings in letzter Konsequenz nicht ohne den Austausch oder die Übermittlung von Belegen, beispielsweise gedruckten Berechtigungsscheinen und dgl. aus. Dies liegt in erster Linie daran, daß keine eindeutigen individualisierbaren Nutzeridentifikationen möglich sind. In halbautomatischen Systemen, beispielsweise der Ausgabe von Flugtickets, wird auf vom Anbieter herausgegebene Sonderkarten, im allgemeinsten Fall auf Kreditkartennummern Bezug genommen, so daß die Vorlage dieser Sonderberechtigungskarten oder Kreditkarten oder das Einfügen in Automaten zum Ausdrucken eines Tickets führt. Alle bekannten Sondersysteme sind weitestgehend inkompatibel und unwirtschaftlich, da sie eine Vielzahl von nur für den einzelnen Zweck vorgesehene Sondervorrichtungen erfordern. Darüber hinaus muß der Nutzer eine Vielzahl von Belegen, Karten und dgl. bereithalten und bei allen Nutzungen letztlich doch immer wieder Einzelschritte manuell abwickeln, wie beispielsweise das Entnehmen oder Ziehen eines Parkhausscheines, das Ausdrucken eines Fahrscheines und dergleichen. Darüber hinaus sind die meisten bekannten Systeme nicht in der Lage, auch vollautomatisch Folgemaßnahmen durchzuführen, wie beispielsweise eine sich an die Nutzung direkt anschließende automatisierte Abrechungsabwicklung.

Der vorliegenden Erfindung liegt daher die **Aufgabe** zugrunde, ein Verfahren der gattungsgemäßen Art bereitzustellen welches auf viele verschiedene Anwendungsbereiche einfach anpaßbar, automatisch und insbesondere nutzerseitig denkbar vereinfacht durchführbar ist.

Im Rahmen der Erfindung werden auch Vorrichtungen für den Einsatz im erfindungsgemäßen Verfahren angegeben.

Zur technischen **Lösung** wird mit der vorliegenden Erfindung vorgeschlagen ein Verfahren zur automatisierten Abwicklung von Verfügbarkeitsprüfungs-, Reservierungs- und Zuordnungsvorgängen in bezug auf örtlich festgelegte Waren- und/oder Dienstleistungsangebote, wobei unter Verwendung einer überregionalen Kommunikationsverbindung vor dem Hintergrund eines nutzerseitigen Bedarfs
a) eine nutzerseitige Festlegung auf ein anbieterseitiges Angebot erfolgt,
b) nutzerseitig eine Kennung übermittelt wird
c) anbieterseitig eine Reservierung unter Speicherung der Kennung und Bereitstellung der Reservierungs- und Kennungsinformationen an ein Kennungsprüfungssystem durchgeführt werden,
   und wobei unter Nutzung einer Nahbereichs-Kommunikationsverbindung
d) bei Eintritt des Nutzers in den Nahbereich des Kennungsprüfungssystems eine berührungslose Kennungsüberprüfung und
e) bei positivem Kennungsüberprüfungsergebnis eine Zugangsfreigabe für den Nutzer erfolgen.

Im Sinne der vorliegenden Erfindung umfaßt die Bezeichnung überregionale Kommunikationsverbindung jegliches realisierte oder denkbare Kommunikationssystem, welches vorzugsweise für die digitale Informationsübermittlung über weite Entfernungen geeignet ist. Dabei sind derzeit beispielsweise Mobilfunksysteme und dgl. verwendbar. Insbesondere findet die überregionale Kommunikation zwischen Nutzer und Anbieter unter Verwendung mobiler Kommunikationsendgeräte statt, beispielsweise über Handys, Palmtops und dergleichen. Zumindest nutzerseitig ist die Verwendung mobiler Kommunikationsendgeräte ein wesentlicher Aspekt zur Vereinfachung der Nutzung des Systems, denn der Nutzer kann praktisch aus dem gesamten Bereich Zugriff auf örtlich festgelegte Waren- und/oder Dienstleistungsangebote nehmen.

Unter örtlich festgelegte Waren- und/oder Dienstleistungsangeboten ist im Sinne der Erfindung zu verstehen, daß es sich um Waren handelt, die an vorgegebenen Orten oder an einer bestimmten Art von Orten im Empfang genommen werden können bzw. daß es sich um Dienstleistungen handelt, die an vorgegebenen Orten oder einer bestimmten Art von Orten genutzt werden können. So können Waren an mehreren Ausgabestellen zur Ausgabe bereitgestellt sein oder die Dienstleistungen verfügbar gemacht werden. Beispielsweise kann die überregionale Anforderung einer Fahrtberechtigung an verschiedenen Einstiegsstellen eingelöst werden.

Die Anforderung einer Ware oder Dienstleistung kann auf der Basis einer nutzerseitigen Bedarfsanzeige erfolgen oder aufgrund der Auswahl allgemein ausgegebener Angebote. Hat ein Nutzer einen konkreten Bedarf, sucht er beispielsweise einen Parkplatz in einem Parkhaus, wird er von sich aus das entsprechende Parkhaussystem anwählen und mit diesem zum Zwecke der Abwicklung in Kommunikation treten, so daß im Rahmen der Erfindung die verfahrensgemäße Anwendung aufgrund eines nutzerseitigen Anstoßes erfolgt. Umgekehrt kann aber auch anbieterseitig ein Angebot verfügbarer Waren oder Dienstleistungen ausgegeben werden, so daß Kunden sich über das bestehende Angebot orientieren und wunschgemäß auswählen können. Eine Indeckungsbringung von Bedarf und Angebot kann auch einen Abgleich erfassen, der mehrere Kommunikationsschritte umfaßt. So können beispielsweise bei Anwendung des Verfahrens im Personenverkehr nutzerseitig Start- und Zielort mit anbieterseitigen Angeboten abgeglichen werden.

Nachdem nutzerseitig ein Nutzungsinteresse über das überregionale Kommunikationssystem mitgeteilt wurde, wobei alle Übermittlungsarten denkbar sind wie beispielsweise Übermittlung digitaler Werte unter Nutzung eines GPS/SMS-Systems, GPRS, UMTS, des Internets, beispielsweise sogenannte WAP-Verbindungen, oder dgl., aber auch die Übermittlung sogenannter Voice-Mails, die z. B. im anbieterseitigen Rechnersystem digitalisiert und analysiert werden, erfolgt anbieterseitig anhand von Datenbanken oder datenbankähnlichen Bestandsübersichten eine Verfügbarkeitsprüfung. So kann beispielsweise in einem Parkhaus unter Nutzung örtlicher Überwachungssysteme das Vorhandensein eines freien Parkplatzes überprüft werden oder es wird eine Datenbanksimulation vorhandener Kapazitäten geführt und ausgewertet. Sofern die nachgefragte Ware oder Dienstleistung verfügbar ist, kann anbieterseitig die Anfrage abgedeckt werden. Die Abdeckbarkeitsprüfung anbieterseitig kann entfallen, wenn es sich um nicht vereinzelte Angebote handelt, beispielsweise allgemeine Fahrtberechtigungen im Personennahverkehr und dergleichen.

Sobald dem potentiellen Nutzer die Abdeckbarkeit seines Nutzungswunsches übermittelt wurde, kann dieser eine Angebotsannahme und eine Kennungsübermittlung durchführen. Dabei kann es sich um getrennte oder vereinheitlichte Vorgänge handeln. Beispielsweise kann die aktive Übermittlung einer Kennung zugleich die Angebotsannahme darstellen.

Die Kennung kann auf unterschiedliche Weise generiert werden. Gemäß einem Vorschlag der Erfindung kann die Kennung manuell erzeugt werden, in dem nutzerseitig eine Tastenkombination eingegeben wird. Diese kann in vorteilhafter Weise zugleich auch im Mobilfunkgerät des Nutzers zu späteren Erinnerungszwecken oder Wiederholbarkeitszwecken hinterlegt werden. Auch können automatisch Kennungen erzeugt oder aus einem Speicher entnommen und übertragen werden. Beispielsweise können die Mobilfunk-ID, die Telefonnummer, Telefonmerkmale wie beispielsweise Seriennummer, oder sonstige das Gerät identifizieren und elektronisch im Gerät abfragbare Daten verwendet werden, beispielsweise Daten der Telefonkarte, PIN, oder Daten im endgeräteseitigen Telefonnotizbuch.

Anbieterseitig wird die dem Nutzer zugeordnete Kennung gespeichert und einer Vorrichtung zugeführt, die geeignet ist, berührungslos, d. h. drahtlos, mit einer nutzerseitigen Einheit zu kommunizieren, um die dort hinterlegte Kennung zu erfassen und mit der gespeicherten Kennung zu vergleichen oder die erfaßte Kennung zu einer Vergleichsprüfung weiterzuleiten.

Das Kennungssystem umfaßt nutzerseitig eine Einheit, in welche ein ausschließlich dem Nutzer zugeordnete, diesen also individualisierende Kennung hinterlegt ist. Diese Einheit ist in der Lage, die Kennung zu einer berührungslosen Abfrage bereitzustellen, und zwar vorzugsweise sowohl dem nutzerseitigen überregionalen Kommunikationssystem als auch dem anbieterseitigen Kennungsprüfsystem. Die Kennung kann ein Digitalcode sein, der über unterschiedliche digitale Übermittlungsmedien berührungslos übertragbar ist, beispielsweise über Digitalfunksystem, optische System und dergleichen.

Sofern ein Nutzer in den Nahbereich einer anbieterseitigen Prüfeinheit gelangt, kann die Kennungsüberprüfung eingeleitet werden. Unter Nahbereich wird im Sinne der Erfindung ein Kurzdistanzbereich um die Prüfeinheit verstanden, welche die Prüfeinheit in die Lage versetzt, mit der nutzerseitigen Kennungseinheit zu kommunizieren.

Innerhalb des Nahbereiches findet zwischen dem Kennungsprüfsystem und dem Nutzer eine Kommunikation unter Nutzung einer Nahbereichs-kommunikationsverbindung statt. Derartige Nahbereichskommunikationsverbindungen können Nahfunkstreckensysteme, optische Kommunikationssystem und dgl. sein. Nahfunkstreckensysteme sind beispielsweise als Ergänzung zu Mobilfunksystemen einsetzbar, sogenannte Blue Tooth. Optische Systeme können Infrarotschnittstellen und dgl. sein. Je nach Anwendungsfall können unterschiedliche Nahbereichskommunikationsysteme erforderlich sein, um bedarfsgerecht auf andere Weise nutzbar zu sein. Nahbereichskommunikationsverbindungen können auch durch den Aufbau und die Nutzung von Mobilfunkverbindungen realisiert werden.

Nachdem aufgrund der Nahbereichskommunikation das anbieterseitige System in der Lage ist, eine Kennungsüberprüfung durchzuführen, kann die Nutzungsfreigabe bzw. die Zugangsfreigabe erfolgen. So können beispielsweise Parkhausschranken geöffnet, Warenausgabesysteme aktiviert oder Zugangsbereiche für den Nutzer geöffnet werden. Auch können hinterlegte Berechtigungen überprüft werden, beispielsweise kann automatisch festgestellt werden, ob die der Kennung zugeordnete Person berechtigt ist, an einem bestimmten Flug teilzunehmen, eine bestimmte Ware zu empfangen oder dergleichen.

Das erfindungsgemäße Verfahren basiert auf der individualisierenden Zuordnung von Nutzerperson und Kennung. Unter Nutzung überregionaler Datenfernübertragungssysteme kann zu nahezu beliebigen Anwendungen eine Kennung übermittelt werden, die anbieterseitig einer Ware, Dienstleistung oder Nutzungsort zugeordnet und hinterlegt wird. Aufgrund der Nahbereichskommunikation kann dann festgestellt werden, ob die die Kennung abgebende Person zum Empfang, zur Nutzung und dgl. berechtigt ist. Man spricht von einem sogenannten "White-list"-System, bzw. einer "Positiv-Liste".

Aufgrund der individualisierenden Zuordnung von Nutzerperson und Kennung kann das erfindungsgemäße System auf einfache Weise um ein automatisches Abrechungssystem ergänzt werden. Über die individualisierende Zuordnung läßt sich das Verfahren koppeln mit Kreditkartensystemen, zentralen Abrechnungssystemen, beispielsweise dem zentralisierten Abrechnungssystem der Mobilfunkanbieter, einem Fakturierungsystem durch Nutzung hinterlegter Rechnungsstellungsinformationen, oder auch mit anbieterseitig geführten und auf Nutzer bezogene Guthabensystemen.

Die Anwendungsbreite des erfindungsgemäßen Verfahrens ist äußerst vielseitig und praktisch unerschöpflich. Beispiele sind die Anwendungen in Parkhaussystemen, für die Kraftstoffausgabe an Tankstellen, Zugangsberechtigungsanlagen, Anwendungen im Personennahverkehr und Personenfernverkehr einschließlich der Anwendung auf Flugzeuge, Fähren und dergleichen, Anwendungen in Freizeitanlagen aber auch Anwendungen im Hardwarebereich, beispielsweise Drive-In-Abholsystem für Nahrungsmittel, insbesondere Fast-Food, aber auch sonstige Hardware. So ist sogar denkbar, Ausgabestellen in Warenlagerhäusern mit über Datenfernübertragung bestellten Waren zu bestücken und aufgrund eines über Nahbereichskommunikation übermittelten Berechtigungscode freizugeben.

Das erfindungsgemäße Verfahren ist auch dauernutzerfähig, denn es kann vorgesehen sein, eine einmal eingerichtete Berechtigungszuordnung dauerhaft zu speichern und regelmäßig bei Erkennung des Berechtigungscodes aufgrund der Nahbereichskommunikation die Zugangs- und/oder Nutzungsfreigabe zu erteilen.

Eine Konkretisierung des erfindungsgemäßen Verfahrens sowie vorrichtungsseitige Merkmale der Erfindung ergeben sich aus der folgenden Beschreibung eines Anwendungsbeispiels, anhand der Figuren. Dabei zeigt:

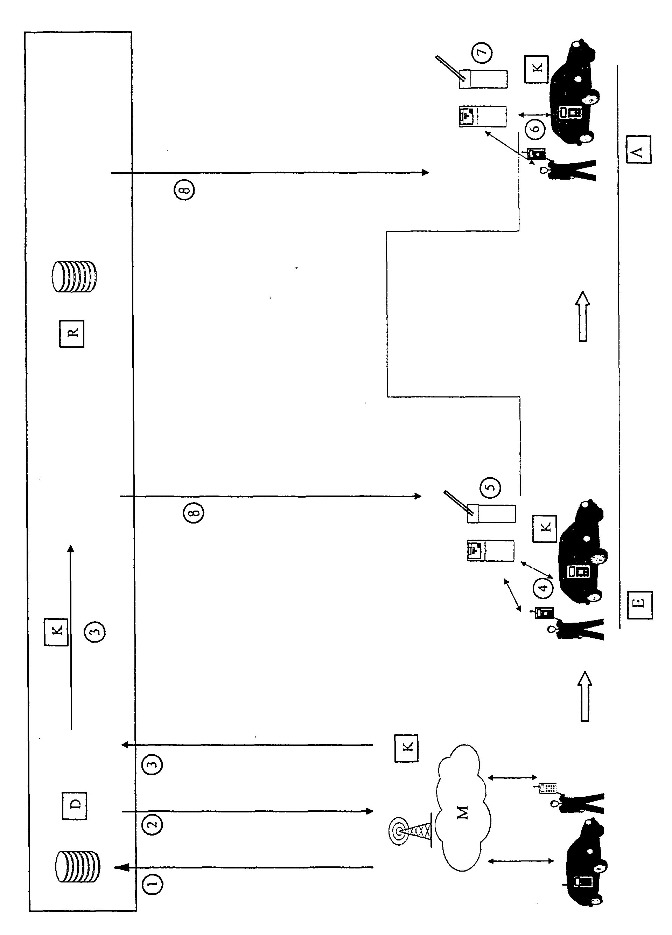

- Fig. 1: eine schematische Darstellung eines Ausführungsbeispiels der Erfindung.

Das Anwendungsbeispiel betrifft die Abwicklung einer Parkplatzzuordnung in einem Parkhaus.

Dabei kann von unterschiedlichen Ausgangsszenarien ausgegangen werden. Es ist denkbar, daß ein Nutzer bereits lange im voraus seinen Bedarf an einem Parkplatz in einem Parkhaus, beispielsweise in einer anderen Stadt, kennt. Auch ist es denkbar, daß eine Person erst kurzfristig den entsprechenden Bedarf erkennt und nach einem geeigneten Parkhaus und Parkplatz sucht. So kann erfindungsgemäß vorgesehen sein, daß der direkten Kommunikation mit dem Parkhaussystem eine übergeordnete Parkhausauswahlkommunikation erfolgt, in welcher es dem Nutzer ermöglicht wird, ohne das konkrete Parkhaus zu kennen, zunächst das örtlich geeignetste herauszufinden, welches noch über freie Parkplätze verfügt.

Sobald der Nutzer aufgrund gezielten Bedarfs oder einer Auswahl von Angeboten über sein Handy unter Nutzung eines Mobilfunknetzes M mit dem Parkhaussystem in Verbindung gelangt, wird auf Seiten der Parkhausbetreiber mittels eines Rechners die Anfrage 1 erkannt und die Verfügbarkeit geprüft. Ein derartiger Rechner kann als Rechnernetzsystem oder als Einzelrechner ausgelegt sein. Der Rechner verfügt über eine Schnittstelle für die Datenfernübertragung und geeignete Systeme zur Analyse der eingehenden Informationen. Der Rechner verfügt weiterhin über Systeme zur Überprüfung des vorhandenen Parkplatzbestandes und zur Feststellung, ob ein konkreter Parkplatz angeboten werden kann oder nicht. Nach erfolgter Verfügbarkeitsüberprüfung D gibt der Rechner über die Datenfernverbindung an den Nutzer ein entsprechendes Angebotssignal 2 ab. Der Nutzer kann nun das Angebot annehmen. Dies erfolgt durch die aktive Abgabe eines entsprechenden Signals 3 durch den Nutzer. Die Abgabe dieses Signals 3, welches die Angebotannahme symbolisiert, kann getrennt oder in direkter Verbindung mit der Übermittlung der nutzereigenen Kennung K erfolgen. Verfügt das Kommunikationsendgerät des Nutzers zugleich über eine integrierte Nahbereichskommunikationseinheit mit entsprechender Kennung K, so übermittelt das Fernkommunikationsystem, im vorliegenden Beispielsfall das Mobilfunksystem M, automatisch die Kennung K, welche auch dem Nahbereichskommunikationssystem zur Verfügung steht. Dieses Nahbereichskommunikationssystem ist beispielsweise ein sogenannter Blue Tooth, also eine nahfunkfähige separate Einheit. Es kann sich aber auch um eine Infrarotschnitttstelle oder eine sonstige Schnittstelle zur optischen Kennungsübermittlung handeln.

Anbieterseitig wird nun im System registriert, daß unter Angabe einer bestimmten Kennung ein vorgegebener oder ein einer Auswahl zugeordneter Parkplatz nutzbar ist. Diese Information überträgt der anbieterseitige Rechner nun an das Zugangsprüfsystem.

Verfahrensgemäß kann vorgesehen sein, daß der Nutzer zusätzlich Weginformationen erhält. Ist beispielsweise der konkrete Ort des Nutzers bekannt, so kann von dem anbieterseitigen Rechner die Zufahrtsinformation übermittelt werden. Der nutzerseitige Ort kann sich aus verschiedenen Quellen ergeben. Beispielsweise kann das nutzerseitige System GPS-fähig sein, oder der Mobilfunkbetreiber, der üblicherweise bis auf sehr kurze Distanzen sehr genau den Quellort des Mobilfunkendgerätes kennt, stellt die Ortsinformation zur Verfügung. Aufgrund des Nutzerortes und des Zielortes kann nun mittels eines Rechners unter Einbeziehung der infrastrukturellen Gegebenheiten und ggf. sogar unter Einbeziehung aktueller Verkehrsinformationen, Baustelleninformationen und dgl. ein Weg zum Zielort ermittelt und dem Nutzer übertragen werden. Nutzerseitig erfolgt die Darstellung des Weges über Zeigersymbole, nutzerseitige Kartensysteme, in graphischer Darstellung oder dergleichen.

Gelangt nun der Nutzer in den Parkhausnahbereich, insbesondere in den Nahbereich der Parkhauseinfahrt, wo sich die Zugangssysteme befinden, wird systemseitig überprüft, ob eine Nahbereichkommunikationsverbindung 4 hergestellt werden kann. Zweckmäßigerweise werden die Parkhausbetreiber für vorreservierte Parkplätze gesonderte Zufahrten einrichten, um Wartezeiten vermeiden zu können. Parkhausseitig kann auch der Bereich, in dem eine Nahbereichskommunikation 4 stattfinden kann, durch Signale oder optische Mittel identifiziert sein.

Sobald der Nutzer im Nahkommunikationsbereich eingetreten ist, wird die Nahbereichskommunikation 4 zwischen dem nutzerseitigen Kommunikationsendgerät und dem parkhausseitigen im Zufahrtsbereich aufgestellten Kommunikationsgerät hergestellt. Dies kann durch parkhausseitige Aktivierung erfolgen oder durch gesonderte Aktivierung durch den Nutzer. Sobald die beiden Systeme miteinander kommunizieren, fragt das Parkhaussystem die Kennung K ab und/oder übermittelt das nutzerseitige System automatisch seine Kennung K. Die parkhausseitigen Vorrichtungen stehen über ein Netz oder wiederum über Funkverbindungen in Verbindung mit dem Rechnersystem und überprüfen nun die Zuordnung von Kennung K und Berechtigung. Bei Übereinstimmung der Kennung K wird beispielsweise die Zufahrtsschranke % geöffnet.

Zugleich können zur späteren Integration eines automatischen Abrechnungssystems die erforderlichen Informationen erfaßt, gespeichert und/oder an ein Rechnersystem übertragen werden, beispielsweise die Einfahrtsuhrzeit der Kennung.

Bei der Ausfahrt kann wiederum die Kennungsüberprüfung 6 erfolgen, so daß dem Nutzer die Ausfahrt 7 freigegeben wird.

Bei einer Integration in ein automatisches Abrechnungssystem sind verschiedene Realisationsmöglichkeiten gegeben. So kann bereits aufgrund einer allgemein organisierten oder einer durch das Parkhaussystem direkt organisierten Zuordnung von Kennung zu einem Kreditkartensystem oder zum Abrechnungssystem des Mobilfunkbetreibers eine automatische auf die Parkdauer bezogene Kostenabbuchung erfolgen. Ebenso kann eine automatische Rechnungserstellung erfolgen oder eine automatische Abbuchung eines vorher mit dem Parkhaussystem festgelegten oder eines allgemein organisierten Guthabensystems erfolgen.

Anstelle der Verwendung eines Blue Tooth für die Funknahverbindung ist es auch denkbar, das Kommunikationsendgerät mit optischen Übertragungsschnittstellen zu versehen, die mit entsprechenden optischen Systemen mit der Parkhausanlage kommunizieren. Dabei können Infrarotschnittstellen, optische Pulssignalübermittlung und dgl. verwendet werden. Generell ist es auch denkbar, das Kennungssystem völlig abgekoppelt vom Kommunikationsendgerät zu betreiben. In diesem Fall wird es erforderlich, das Mobilfunkendgerät zu befähigen, zwar bei der Angebotsannahme die Kennung zu übermitteln, ansonsten wird das Kommunikationsendgerät nicht in Überprüfungsverfahren eingesetzt. In diesem Fall kann ein zusätzliches Gerät für die Kennungsüberprüfung eingesetzt werden. Ein derartiges zusätzliches Gerät bietet den Vorteil, auch unabhängig vom Funktionieren des Mobilfunkendgerätes betreibbar zu sein.

Das beschriebene Anwendungsbeispiel dient nur der Erläuterung und ist nicht beschränkend. Die vorrichtungsseitigen Merkmale beschreiben einerseits ein anbieterseitiges System, welches separiert oder integriert datenfernübertragungsfähig im überregionalen Bereich einerseits und im Nahbereich andererseits ist. Weiterhin bedarf es anbieterseitig eines Rechnersystems, welches zentrale Aufgaben wie Verfügbarkeitsüberprüfung und ggf. Abrechnung und dgl. durchführen kann, andererseits dezentrale Maßnahmen wie Berechtigungsüberprüfungen und dergleichen realisieren kann. Nutzerseitig ist ein Kommunikationsendgerät für die überregionale Datenfernübertragung sowie eine Einheit zur berührungslosen Nahbereichskommunikation erforderlich, um Berechtigungsüberprüfungen realisierbar zu machen.

### Bezugszeichenliste

- 1: Anfage
- 2: Angebot
- 3: Angebotsannahme
- 4: Nahbereichskommunikation
- 5: Zufahrtsschranke
- 6: Nahbereichskommunikation
- 7: Ausfahrtsschranke
- 8: Kennungsprüfung
- M: Mobilfunknetz
- K: Kennung
- D: Angebots-Abdeckbereichs-Prüfung
- R: Kennung-/Reservierungsinformationen
- E: Einfahrt
- A: Ausfahrt

## Patentansprüche

1. Verfahren zur automatisierten Abwicklung von Verfügbarkeitsprüfungs-, Reservierungs- und Zuordnungsvorgängen in bezug auf örtlich festgelegte Waren- und/oder Dienstleistungsangebote, wobei unter Verwendung einer überregionalen Kommunikationsverbindung vor dem Hintergrund eines nutzerseitigen Bedarfs
a) eine nutzerseitige Festlegung auf ein anbieterseitiges Angebot erfolgt,
b) nutzerseitig eine Kennung übermittelt wird,
c) anbieterseitig eine Reservierung unter Speicherung der Kennung und Bereitstellung der Reservierungs- und Kennungsinformationen an ein Kennungsprüfungssystem durchgeführt werden,
und wobei unter Nutzung einer Nahbereichs-Kommunikationsverbindung
d) bei Eintritt des Nutzers in den Nahbereich des Kennungsprüfungssystems eine berührungslose Kennungsüberprüfung und
e) bei positivem Kennungsüberprüfungsergebnis eine Zugangsfreigabe für den Nutzer erfolgen.

2. Verfahren nach Anspruch 1, dadurch gekennzeichnet, daß als überregionale Kommunikationsverbindung ein Mobilfunknetzsystem verwendet wird.

3. Verfahren nach einem der vorhergehenden Ansprüche, dadurch gekennzeichnet, daß als Nahbereichs-Kommunikationsverbindung ein Mobilfunknetzsystem verwendet wird.

4. Verfahren nach einem der vorhergehenden Ansprüche, dadurch gekennzeichnet, daß als Nahbereichs-Kommunikationsverbindung eine Nahbereichsfunkstrecke verwendet wird.

5. Verfahren nach einem der vorhergehenden Ansprüche, dadurch gekennzeichnet, daß die Kennung für einen Nutzungsvorgang mit räumlich oder zeitlich begrenzter Gültigkeit erteilt wird.

6. Verfahren nach einem der vorhergehenden Ansprüche, dadurch gekennzeichnet, daß die Nahbereichskommunikation nutzerseitig aktiviert wird.

7. Verfahren nach einem der vorhergehenden Ansprüche, dadurch gekennzeichnet, daß die berührungslose Kennungsüberprüfung optisch erfolgt.

8. Verfahren nach einem der vorhergehenden Ansprüche, dadurch gekennzeichnet, daß die nutzerseitige Kennungsabgabe zu Übermittlungs- und/oder Überprüfungszwecken aufgrund besonderer Aktivierung erfolgt.

9. Verfahren nach einem der vorhergehenden Ansprüche, dadurch gekennzeichnet, daß die Abwicklung der Kommunikation, der Verfügbarkeitsprüfung, der Reservierung und Zuordnung mittels einer Zentralrechneranlage durchgeführt wird.

10. Verfahren nach Anspruch 9, dadurch gekennzeichnet, daß die Zentralrechneranlage über Datenfernübertragungsschnittstellen sowie Systeme für die Anfrageanalyse, die Abdeckbarkeitsprüfung, die Angebotserstellung und-übermittlung, die Kennungsannahme und -speicherung, die Kommunikation mit Kennungsprüfungs- und/oder Zugangsfreigabesystemen sowie ggf. Bereitstellungseinheiten verfügt.

11. Verfahren nach einem der vorhergehenden Ansprüche, dadurch gekennzeichnet, daß dieses für die Reservierung von Parkplätzen in Parkhaussystemen und die Freigabe zum Zugang zum reservierten Parkplatz durch den Nutzer verwendet wird.

12. Verfahren nach einem der vorhergehenden Ansprüche, dadurch gekennzeichnet, daß mit diesem nach erfolgter Nutzung unter Verwendung der Kennung und der Informationen über die durchgeführte Nutzung eine automatische Abrechungsabwicklung durchgeführt wird.
